# EUROPEAN PATENT APPLICATION

(11) **EP 4 628 344 A1**
(43) Date of publication of application: **08.10.2025**
(21) Application number: 22967300.9
(22) Date of filing: 01.12.2022
(51) Int. Cl.: B60L 3/00, H01H 47/00, B60L 53/22

(54) **RELAY DEVICE AND BATTERY CHARGING APPARATUS COMPRISING SAME**

(71) Applicant: LG Magna e-Powertrain Co., Ltd., Seo-gu, Incheon 22744 (KR)
(72) Inventor: LEE, Dongcheol, Incheon 22744 (KR); LIM, Sunkyoung, Incheon 22744 (KR); LEE, Junggi, Incheon 22744 (KR); PARK, Sanghoon, Incheon 22744 (KR); YEUM, Jeagyeong, Incheon 22744 (KR)
(74) Representative: Vossius & Partner Patentanwälte Rechtsanwälte mbB
(86) International application number: PCT/KR2022/019403
(87) International publication number: WO 2024/117325

(57) **Abstract**

A relay device, and a battery charging device including the same are disclosed. The relay device includes: a current limiter to limit current of input AC power; a relay of which primary side is connected between a first terminal and a second terminal corresponding to both terminals of the current limiter; a first power supply connected between a third terminal corresponding to a secondary side of the relay, and a ground terminal, and to supply first power; a first switching element connected between a fourth terminal corresponding to a secondary side of the relay, and the ground terminal; and a second power supply and a second switching element connected to each other in series between the fourth terminal and the ground terminal, and the second power supply is configured to supply second power lower than the first power. Accordingly, it is possible to reduce heat generation of the relay.

## Description

### BACKGROUND

### 1. Field

. The present disclosure relates to a relay device, and a battery charging device including the same, and more particularly, to a relay device which can reduce heat generation of a relay, and a battery charging device including the same.

### 2. Description of the Related Art

. Electric vehicles that has electricity as power, or hybrid vehicles that combine internal combustion engines and these, generate outputs thereof using motors and batteries.

. A charging device is required to charge a battery with direct current (DC) power using alternating current (AC) power.

. Meanwhile, when the AC power is instantly supplied, inrush current is generated, and a damage occurrence possibility of an internal circuit element is increased due to the inrush current, so an inrush current prevention circuit for preventing this is required.

. On the other hand, for implementing the inrush current prevention circuit, when a relay is used, there is a problem in that heat generation is increased in the relay.

### SUMMARY

. The present disclosure has been made in view of the above problems, and provides a relay device which can reduce heat generation of a relay, and a battery charging device including the same.

. The present disclosure further provides a relay device which can prevent inrush current upon charging a battery, and a battery charging device including the same.

. In order to achieve the object, in accordance with an aspect of the present disclosure, a relay device, and a battery charging device including the same include: a current limiter configured to limit current of input AC power; a relay of which primary side is connected between a first terminal and a second terminal corresponding to both terminals of the current limiter; a first power supply connected between a third terminal corresponding to a secondary side of the relay, and a ground terminal, and configured to supply first power; a first switching element connected between a fourth terminal corresponding to a secondary side of the relay, and the ground terminal; and a second power supply and a second switching element connected to each other in series between the fourth terminal and the ground terminal, and the second power supply is configured to supply second power lower than the first power.

. Meanwhile, in response to the first switching element being turned on and the second switching element being turned off, the first power can be supplied to the relay, and in response to the first switching element being turned off and the second switching element being turned on, third power which is a difference between the first power and the second power can be supplied to the relay.

. Meanwhile, in response to the first switching element being turned on and the second switching element being turned off, the first power can be supplied to the relay, in response to the first switching element being turned on and the second switching element being turned on, the first power can be supplied to the relay, and in response to the first switching element being turned off and the second switching element being turned on, the third power which is the difference between the first power and the second power can be supplied to the relay.

. Meanwhile, based on an operation of the first switching element or the second switching element, powers at a plurality of levels can be sequentially supplied to a coil in the relay.

. Meanwhile, first current based on the input AC power can flow on the current limiter during a first period, and second current based on the input AC power can flow on the relay during a second period after the first period.

. Meanwhile, the second current can have a higher level than the first current.

. Meanwhile, powers at a plurality of levels can be sequentially supplied to the coil in the relay based on the operation of the first switching element or the second switching element during the second period.

. In accordance with another aspect of the present disclosure, a relay device, and a battery charging device including the same include: a current limiter configured to limit current of input AC power; a relay of which primary side is connected between a first terminal and a second terminal corresponding to both terminals of the current limiter; a power supply connected between a third terminal corresponding to a secondary side of the relay, and a ground terminal; and a switching element connected between a fourth terminal corresponding to a secondary side of the relay, and the ground terminal, and the power supply is configured to supply first power, and then is configured to supply second power lower than the first power.

. Meanwhile, in response to the switching element being turned on, the first power is supplied to the relay, and then the second power lower than the first power can be supplied to the relay.

. Meanwhile, first current based on the input AC power can flow on the current limiter during a first period, and second current based on the input AC power can flow on the relay during a second period after the first period.

. Meanwhile, the second current can have a higher level than the first current.

. Meanwhile, powers at a plurality of levels can be sequentially supplied to a coil in the relay based on an operation of the switching element during the second period.

. In accordance with the aspect of the present disclosure, the battery charging device can further include: a rectifier configured to rectify AC power from the relay device; a converter configured to convert power from the rectifier into DC power; and a dc link capacitor placed at an output terminal of the converter.

. Meanwhile, in accordance with the aspect of the present disclosure, the battery charging device can further include a dc/dc converter configured to convert a level of the DC voltage of the dc link capacitor.

### EFFECTS OF THE DISCLOSURE

. In accordance with an aspect of the present disclosure, a relay device, and a battery charging device including the same include: a current limiter configured to limit current of input AC power; a relay of which primary side is connected between a first terminal and a second terminal corresponding to both terminals of the current limiter; a first power supply connected between a third terminal corresponding to a secondary side of the relay, and a ground terminal, and configured to supply first power; a first switching element connected between a fourth terminal corresponding to a secondary side of the relay, and the ground terminal; and a second power supply and a second switching element connected to each other in series between the fourth terminal and the ground terminal, and the second power supply is configured to supply second power lower than the first power. Accordingly, it is possible to reduce heat generation of the relay. Furthermore, when a battery is charged, inrush current can be prevented.

. Meanwhile, in response to the first switching element being turned on and the second switching element being turned off, the first power can be supplied to the relay, and in response to the first switching element being turned off and the second switching element being turned on, third power which is a difference between the first power and the second power can be supplied to the relay. Accordingly, as powers at different levels are sequentially supplied to the relay, it is possible to reduce heat generation of the relay.

. Meanwhile, in response to the first switching element being turned on and the second switching element being turned off, the first power can be supplied to the relay, in response to the first switching element being turned on and the second switching element being turned on, the first power can be supplied to the relay, and in response to the first switching element being turned off and the second switching element being turned on, the third power which is the difference between the first power and the second power can be supplied to the relay. Accordingly, as powers at different levels are sequentially supplied to the relay, it is possible to reduce heat generation of the relay.

. Meanwhile, based on an operation of the first switching element or the second switching element, powers at a plurality of levels can be sequentially supplied to a coil in the relay. Accordingly, as powers at different levels are sequentially supplied to the relay, it is possible to reduce heat generation of the relay.

. Meanwhile, first current based on the input AC power can flow on the current limiter during a first period, and second current based on the input AC power can flow on the relay during a second period after the first period. Accordingly, when the battery is charged, the inrush current can be prevented.

. Meanwhile, the second current can have a higher level than the first current. Accordingly, when the battery is charged, the inrush current can be prevented.

. Meanwhile, powers at a plurality of levels can be sequentially supplied to the coil in the relay based on the operation of the first switching element or the second switching element during the second period. Accordingly, as powers at different levels are sequentially supplied to the relay, it is possible to reduce heat generation of the relay.

. In accordance with another aspect of the present disclosure, a relay device, and a battery charging device including the same include: a current limiter configured to limit current of input AC power; a relay of which primary side is connected between a first terminal and a second terminal corresponding to both terminals of the current limiter; a power supply connected between a third terminal corresponding to a secondary side of the relay, and a ground terminal; and a switching element connected between a fourth terminal corresponding to a secondary side of the relay, and the ground terminal, and the power supply is configured to supply first power, and then is configured to supply second power lower than the first power. Accordingly, it is possible to reduce heat generation of the relay. Furthermore, when a battery is charged, inrush current can be prevented.

. Meanwhile, in response to the switching element being turned on, the first power is supplied to the relay, and then the second power lower than the first power can be supplied to the relay. Accordingly, as powers at different levels are sequentially supplied to the relay, it is possible to reduce heat generation of the relay.

. Meanwhile, first current based on the input AC power can flow on the current limiter during a first period, and second current based on the input AC power can flow on the relay during a second period after the first period. Accordingly, when the battery is charged, the inrush current can be prevented.

. Meanwhile, the second current can have a higher level than the first current. Accordingly, when the battery is charged, the inrush current can be prevented.

. Meanwhile, powers at a plurality of levels can be sequentially supplied to a coil in the relay based on an operation of the switching element during the second period. Accordingly, as powers at different levels are sequentially supplied to the relay, it is possible to reduce heat generation of the relay.

. In accordance with the aspect of the present disclosure, the battery charging device can further include: a rectifier configured to rectify AC power from the relay device; a converter configured to convert power from the rectifier into DC power; and a dc link capacitor placed at an output terminal of the converter. Accordingly, it is possible to reduce heat generation of the relay. Furthermore, when a battery is charged, inrush current can be prevented.

. Meanwhile, in accordance with the aspect of the present disclosure, the battery charging device can further include a dc/dc converter configured to convert a level of the DC voltage of the dc link capacitor. Accordingly, it is possible to reduce heat generation of the relay. Furthermore, when the battery is charged, the inrush current can be prevented.

### BRIEF DESCRIPTION OF THE DRAWINGS

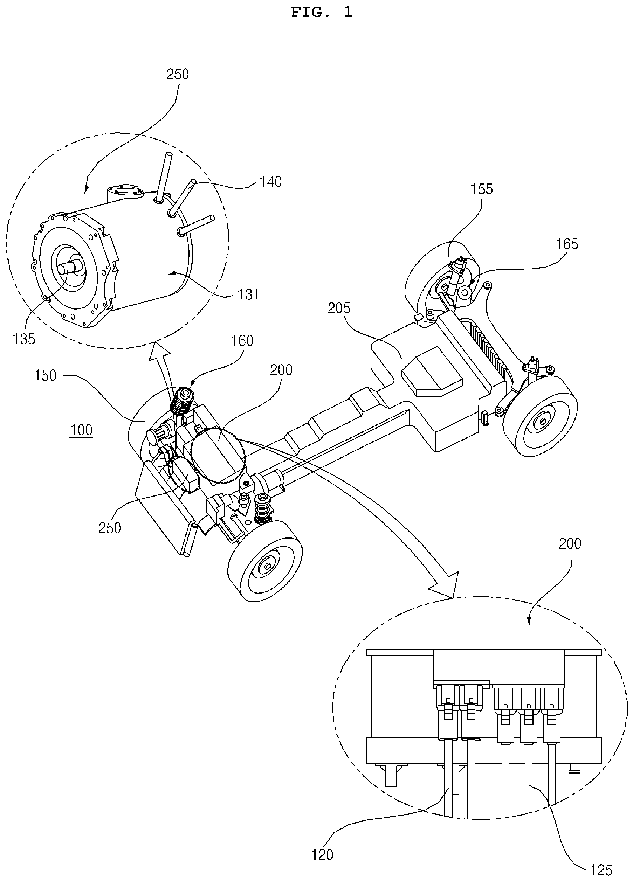

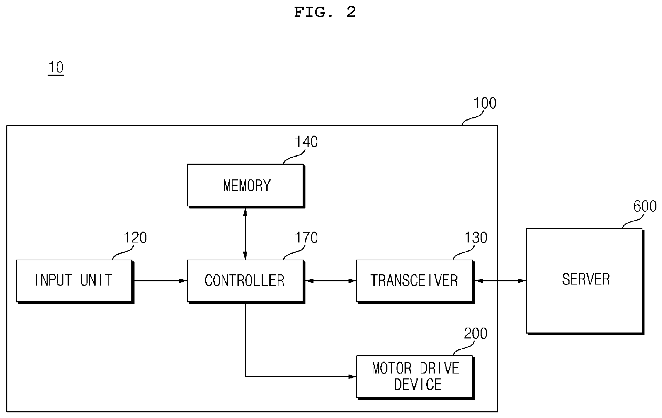

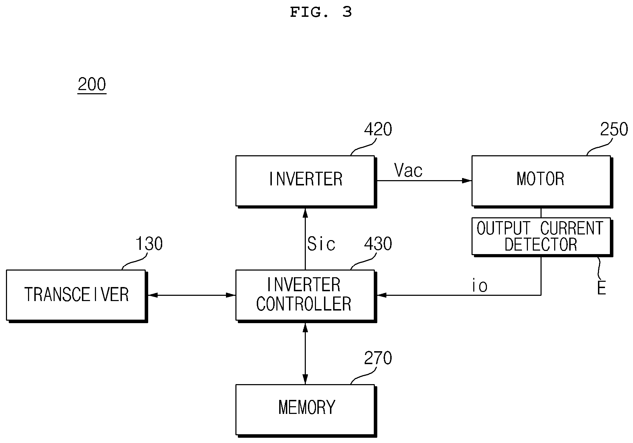

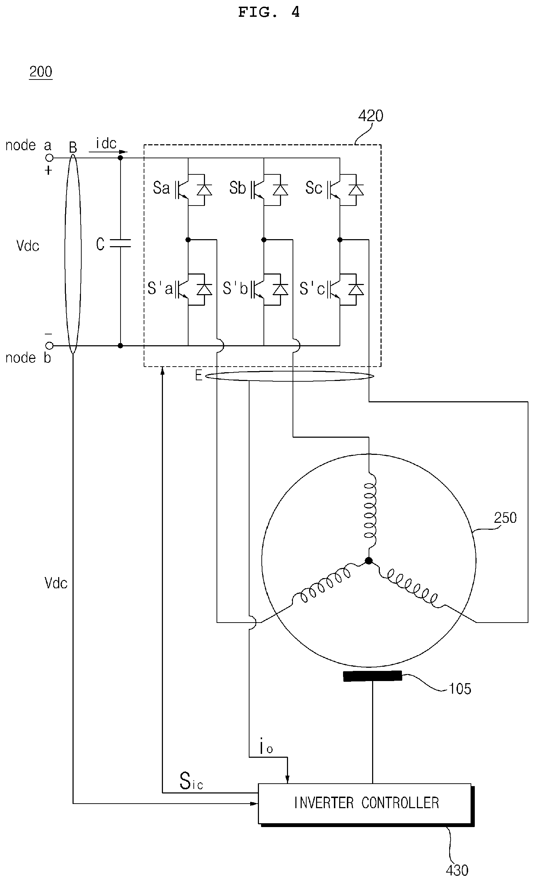

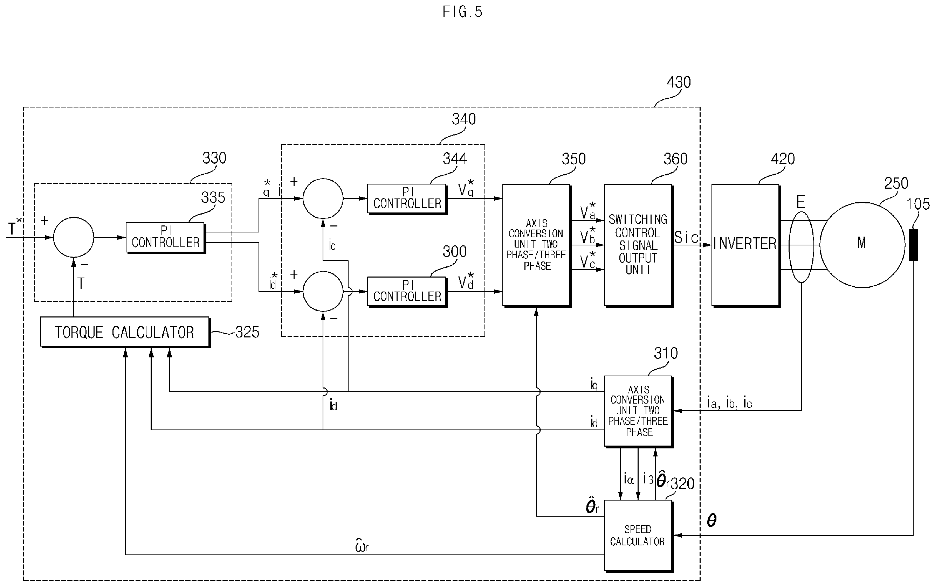

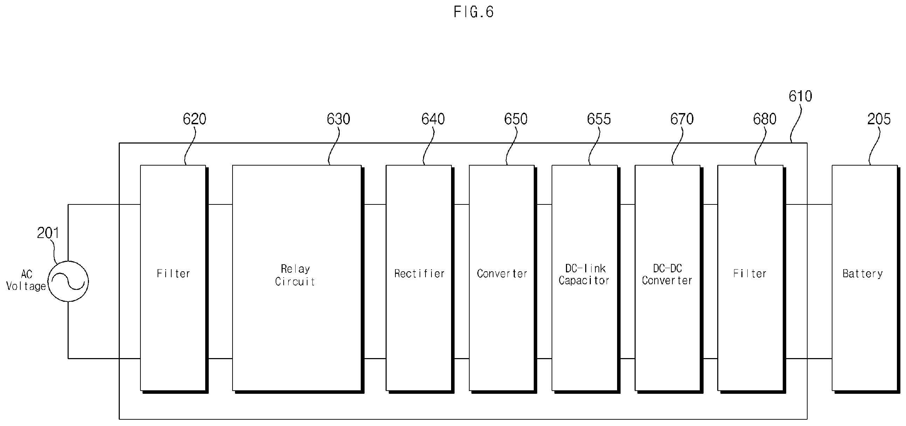

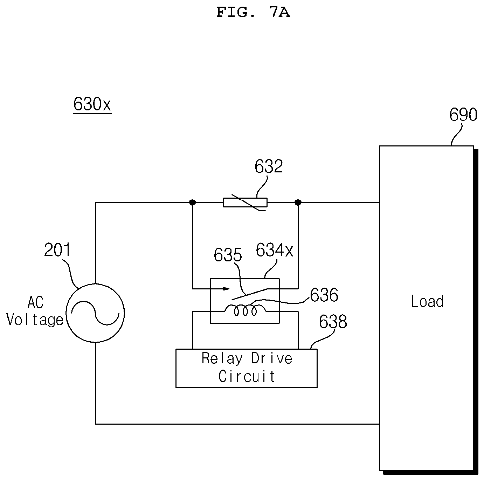

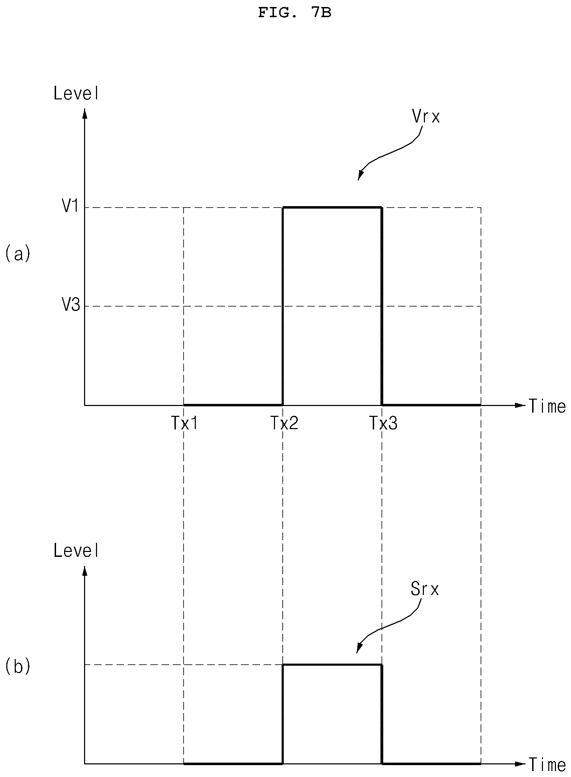

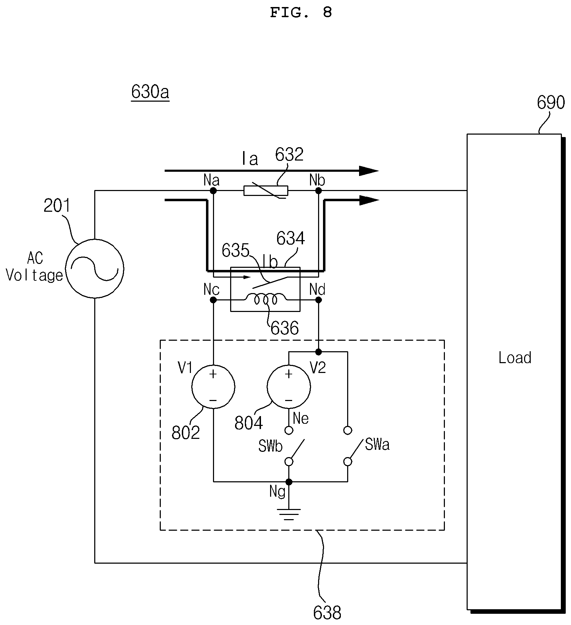

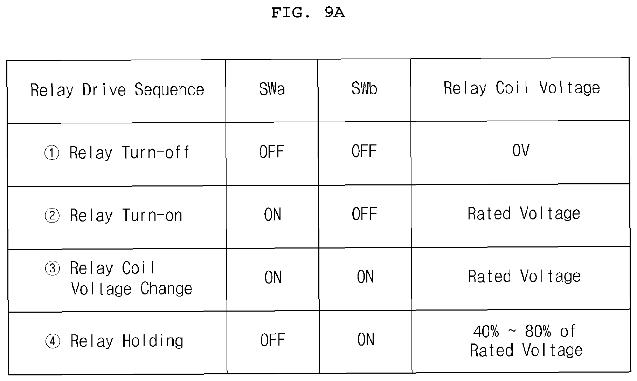

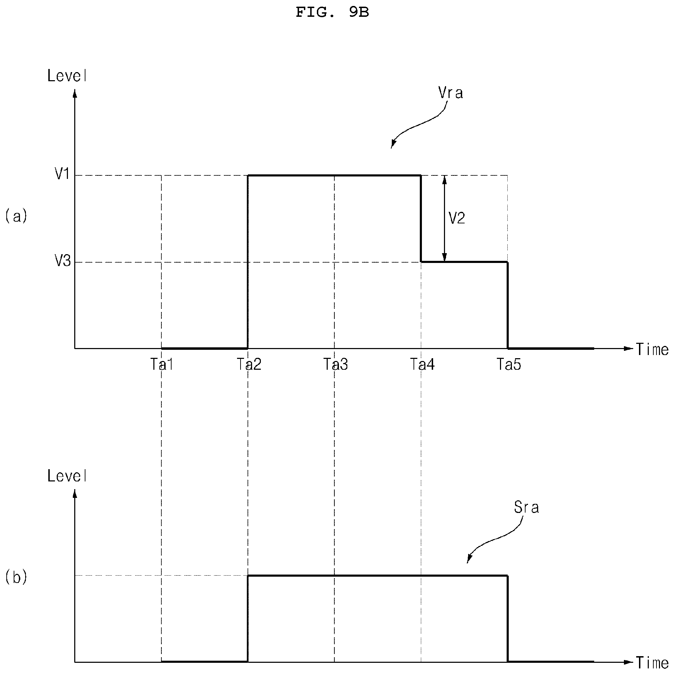

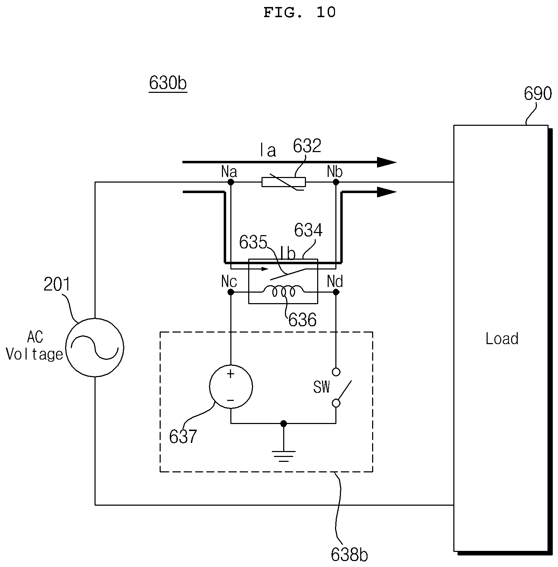

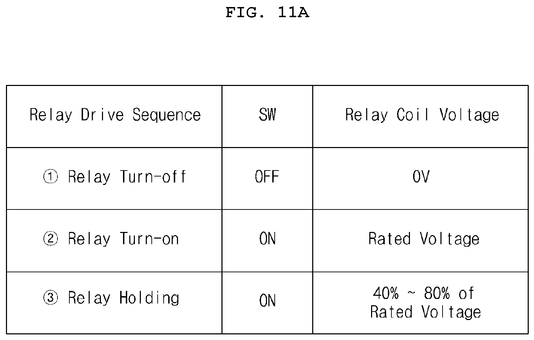

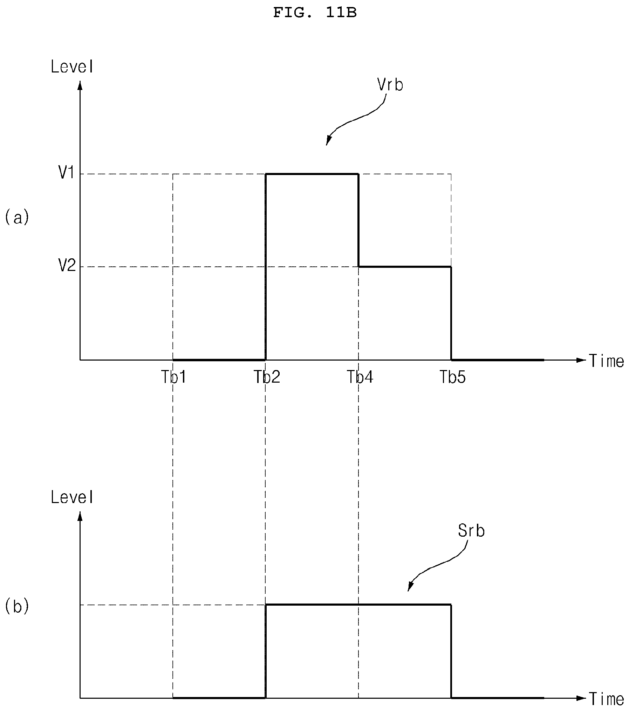

. FIG. 1 is a schematic view showing a vehicle body of a vehicle according to an embodiment of the present disclosure;
. FIG. 2 is an example of a motor drive system according to an embodiment of the present disclosure;
. FIG. 3 illustrates an example of an internal block diagram of a motor driving device of FIG. 2;
. FIG. 4 is an example of an internal circuit diagram of the motor driving device of FIG. 3;
. FIG. 5 is an example of an internal block diagram of an inverter controller of FIG. 4;
. FIG. 6 is a block diagram illustrating a battery charging device according to an embodiment of the present disclosure;
. FIG. 7A is an example of a circuit diagram of a relay device related to the present disclosure;
. FIG. 7B is a view referred to in the description of FIG. 7A;
. FIG. 8 is an example of a circuit diagram of a relay device according to an embodiment of the present disclosure;
. FIGS. 9A and 9B are diagrams referred to in the description of FIG. 8;
. FIG. 10 is an example of a circuit diagram of a relay device according to another embodiment of the present disclosure; and
. FIGS. 11A and 11B are diagrams referred to in the description of FIG. 10.

### DETAILED DESCRIPTION OF THE PREFERRED EMBODIMENTS

. Reference will now be made in detail to the preferred embodiments of the present disclosure, examples of which are illustrated in the accompanying drawings.

. The suffixes "module" and "unit" in elements used in description below are given only in consideration of ease in preparation of the specification and do not have specific meanings or functions. Therefore, the suffixes "module" and "unit" can be used interchangeably.

. FIG. 1 is a schematic view showing a vehicle body of a vehicle according to an embodiment of the present disclosure.

. Referring to the drawing, a vehicle 100 according to an embodiment of the present disclosure can include a battery 205 for supplying power, a motor driving device 200 that is supplied with power from the battery 205, a motor 250 that is driven and rotated by the motor driving device 200, a front wheel 150 and a rear wheel 155 that are rotated by the motor 250, a front wheel suspension device 160 and a rear wheel suspension device 165 that prevent the vibration due to the road surface from being transmitted to a vehicle body, an inclination angle detector 190 for detecting the inclination angle of the vehicle body. Meanwhile, a drive gear (not shown) for configured to convert the rotational speed of the motor 250 based on a gear ratio can be additionally provided.

. The battery 205 is configured to supply power to the motor driving device 200. In particular, the DC power is supplied to a capacitor C in the motor driving device 200.

. The battery 205 can be formed of a plurality of unit cells. The plurality of unit cells can be managed by a battery management system (BMS) to maintain a constant voltage, and can emit a constant voltage by the battery management system.

. For example, the battery management system can detect the voltage Vbat of the battery 205, and transmit the detected voltage Vbat to an electronic controller (not shown) or an inverter controller 430 inside the motor driving device 200, can supply the DC power stored in a capacitor C in the motor driving device 200 to the battery when the battery voltage Vbat falls down to or below a lower limit. In addition, when the battery voltage Vbat rises up to or above an upper limit, DC power can be supplied to the capacitor C in the motor driving device 200.

. The battery 205 is preferably configured as a secondary battery capable of charging and discharging, but is not limited thereto.

. The motor driving device 200 receives DC power from the battery 205 via a power input cable 120. The motor driving device 200 converts the DC power received from the battery 205 into AC power and is configured to supply to the motor 250. The converted AC power is preferably a three-phase AC power. The motor driving device 200 is configured to supply three-phase AC power to the motor 250 through a three-phase output cable 125 provided in the motor driving device 200.

. Although FIG. 1 shows that the motor driving device 200 has the three-phase output cable 125 composed of three cables, but three cables can be provided in a single cable.

. Meanwhile, the motor driving device 200 according to an embodiment of the present disclosure will be described later with reference to FIG. 3 and below.

. The motor 250 includes a stator 131 that is fixed without rotation and a rotor 135 that rotates. The motor 250 is provided with an input cable 140 to receive AC power supplied from the motor driving device 200. The motor 250 can be, for example, a three-phase motor, and the rotation speed of the rotor can be varied based on the applied frequency, when a voltage variable/frequency variable each phase AC power is applied to the coil of the stator of each phase.

. The motor 250 can be implemented in various forms such as an induction motor, a blushless DC motor (BLDC) motor, a reluctance motor, and the like.

. Meanwhile, one side of the motor 250 can be provided with a drive gear (not shown). The drive gear converts the rotational energy of the motor 250 based on the gear ratio. The rotational energy output from the drive gear is transmitted to the front wheel 150 and/or the rear wheel 155 to move the vehicle 100.

. The front wheel suspension device 160 and the rear wheel suspension device 165 support the front wheel 150 and the rear wheel 155 respectively with respect to the vehicle body. The vertical direction of the front wheel suspension device 160 and the rear wheel suspension device 165 is supported by a spring or a damping mechanism so that the vibration due to the road surface does not affect the vehicle body.

. The front wheel 150 can be further provided with a steering device (not shown). The steering device is a device for adjusting the direction of the front wheel 150 in order to drive the vehicle 100 in a direction intended by the driver.

. Meanwhile, although not shown in the drawing, the vehicle 100 can further include an electronic controller for controlling the overall electronic devices in the vehicle. The electronic controller (not shown) controls each device to perform an operation, display, and the like. In addition, the above-described battery management system can be controlled.

. Further, the controller 170 of FIG. 2 can generate driving command values according to various driving modes (driving mode, reverse mode, neutral mode, parking mode, etc.) based on detection signals from an inclination angle detector (not illustrated) that detects an inclination angle of the vehicle 100, a speed detector (not illustrated) that detects a speed of the vehicle 100, a brake detector (not illustrated) according to an operation of a brake pedal, an accelerator detector (not illustrated) according to an operation of an accelerator pedal, etc. The driving command value at this time can be, for example, a torque command value.

. Meanwhile, the vehicle 100 according to the embodiment of the present disclosure can include a hybrid electric vehicle using a battery and a motor while using an engine, as well as a pure electric vehicle using a battery and a motor.

. In this case, the hybrid electric vehicle can further include a switching means capable of selecting at least one of a battery and an engine, and a transmission.

. Meanwhile, the hybrid electric vehicle can be divided into a series method of driving the motor by configured to convert the mechanical energy output from the engine into electrical energy, a parallel method of using the mechanical energy output from the engine and the electrical energy from the battery at the same time, and a seriesparallel method of mixing them.

. FIG. 2 is an example of a motor drive system according to an embodiment of the present disclosure.

. Referring to the drawing, the motor driving system according to an embodiment of the present disclosure can include a vehicle 100 and a server 500.

. Here, the server 500 can be a server operated by the manufacturer of the motor driving device 200 or the vehicle 100, or can correspond to a mobile terminal of the driver of the motor driving device 200 or the vehicle 100.

. Meanwhile, the vehicle 100 can include an input device 120, a transceiver 130, a memory 140, a controller 170, and a motor driving device 200.

. The input device 120 can include an operation button, a key, and the like, and output an input signal for power on/off, operation setting, etc. of the vehicle 100.

. The transceiver 130 can exchange data with an external device, for example, the server 500 by wire or wirelessly, or can exchange data wirelessly with a remote server, or the like. For example, the transceiver 130 can perform mobile communication such as 4G or 5G, infrared (IR) communication, RF communication, Bluetooth communication, Zigbee communication, WiFi communication, and the like.

. Meanwhile, the memory 140 of the vehicle 100 can store data necessary for the operation of the vehicle 100. For example, the memory 140 can store data related to an operation time, an operation mode, and the like during operation of the motor driving device 200.

. In addition, the memory 140 of the vehicle 100 can store management data including power consumption information of the vehicle, recommend driving information, current driving information, and management information.

. In addition, the memory 140 of the vehicle 100 can store diagnostic data including operation information, driving information, and error information of the vehicle.

. The controller 170 can control each unit in the vehicle 100. For example, the controller 170 can control the input device 120, the transceiver 130, the memory 140, the motor driving device 200, and the like.

. The motor driving device 200 can be referred to as a motor driver, as a driver, to drive the motor 250.

. Meanwhile, the motor driving device 200 can include an inverter 420 including a plurality of inverter switching elements and outputting AC power to the motor 250, an output current detector E configured to detect an output current (io) flowing on the motor 250, and an inverter controller 430 outputting a switching control signal to the inverter 420 based on current information id and iq, and a torque command value T* based on an output current io detected by the output current detector E.

. Meanwhile, the current information (id, iq) based on the output current io and the torque command value T* can be transmitted to the external server 500, and can receive a current command value (i*d, i*q) from the server 500. The inverter controller 430 can output a switching control signal to the inverter 420, based on the current command value received from the transceiver 130.

. Accordingly, the motor 250 can be driven based on the current command value corresponding to the maximum torque calculated in real time by the server 500. Thus, maximum torque drive of the motor 250 can be achieved.

. Meanwhile, the transceiver 130 in the motor driving device 200 can transmit the current information (id, iq), the torque command value T*, and the voltage information related to the detected dc terminal voltage Vdc to the server 500. Accordingly, the maximum torque drive of the motor 250 under various conditions can be achieved.

. Meanwhile, the detailed operation of the motor driving device 200 is described with reference to FIG. 3.

. FIG. 3 illustrates an example of an internal block diagram of a motor driving device of FIG. **2****.**

. Referring to the drawing, the motor driving device 200 according to the embodiment of the present disclosure is a drive device for driving the motor 250, and can include an inverter 420 which has a plurality of inverter switching elements (Sa ~ Sc, S'a ~ S'c) and outputs AC power to the motor 250, and an inverter controller 430 for controlling the inverter 420. Further, it can include a memory 270 that provides various stored data to the inverter controller 430.

. Meanwhile, the motor driving device 200 according to the embodiment of the present disclosure can further include a capacitor C that stores a dc-terminal voltage Vdc corresponding to an input terminal of the inverter 420, a dc-terminal voltage detector B that detects the dc-terminal voltage Vdc, an output current detector E that detects the output current flowing on the motor 250, and a position detection sensor 105.

. According to the embodiment of the present disclosure, the motor 250 can be a three-phase motor driven by the inverter 420.

. Meanwhile, the inverter controller 430 can output the switching control signal Sic to the inverter 420, based on the current command value (i*d, i*q) corresponding to the calculated maximum torque. Accordingly, maximum torque driving of the motor 250 can be achieved.

. The inverter controller 430 according to the embodiment of the present disclosure calculates the current information (id, iq) and the torque command value T* in real time, calculates the current command value (i*d, i*q) based on the torque command value T*, and drives the motor 250 using the current command values (i*d, i*q). Accordingly, the accuracy for high efficiency driving is improved.

. Meanwhile, the motor driving device 200 can further include a capacitor C for storing the dc terminal voltage Vdc, corresponding to an input terminal of the inverter 420, and a dc terminal voltage detector (B) for detecting the dc terminal voltage Vdc.

. The inverter controller 430 calculates the current command value (i*d, i*q), based on the current information id, iq, the torque command value T*, and the detected dc terminal voltage Vdc, and drives the motor 250 by using the current command value i*d and i*q. Accordingly, the accuracy for high efficiency driving is improved.

. FIG. 4 is an example of an internal circuit diagram of the motor driving device of FIG. 3.

. Referring to the drawing, the motor driving device 200 according to an embodiment of the present disclosure can include the inverter 420, the inverter controller 430, the output current detector E, the dc terminal voltage detector Vdc, and a position detection sensor 105.

. Meanwhile, since the motor driving device 200 converts electric power to drive the motor, it can be referred to as a power configured to convert device.

. The dc terminal capacitor C stores the power input to the dc terminal (a-b terminal). In the drawing, a single device is exemplified as the dc terminal capacitor C, but a plurality of devices can be provided to ensure device stability.

. Meanwhile, the input power supplied to the dc terminal capacitor C can be a power stored in the battery 205 or a power that is level-converted by a converter (not shown) .

. Meanwhile, since both ends of the dc terminal capacitor C store the DC power, these can be referred to as a dc terminal or a dc link terminal.

. The dc terminal voltage detector B can detect the voltage Vdc of the dc terminal that is both ends of the dc terminal capacitor C. To this end, the dc terminal voltage detector B can include a resistor, an amplifier, and the like. The detected dc terminal voltage Vdc, as a discrete signal in the form of a pulse, can be input to the inverter controller 430.

. The inverter 420 can include a plurality of inverter switching elements (Sa ~ Sc, S'a ~ S'c), and the turning on/off operation of the switching element (Sa ~ Sc, S'a ~ S'c) can convert the DC power Vdc into three-phase AC power Va, Vb, Vc having a certain frequency and output to the three-phase synchronous motor 250.

. In the inverter 420, the upper arm switching element Sa, Sb, Sc and the lower arm switching element S'a, S'b, S'c which are connected in series with each other form a pair, and a total of three pairs of upper and lower arm switching elements are connected in parallel with each other (Sa&S'a, Sb&S'b, Sc&S'c). Diodes are connected in antiparallel to each of the switching elements Sa, S'a, Sb, S'b, Sc, S'c.

. The switching elements in the inverter 420 perform on/off operation of the respective switching elements based on the inverter switching control signal Sic from the inverter controller 430. Thus, the three-phase AC power having a certain frequency is output to the three-phase synchronous motor 250.

. The inverter controller 430 can be configured to control a switching operation of the inverter 420, based on a sensorless method.

. To this end, the inverter controller 430 can receive an output current io detected by the output current detector E.

. The inverter controller 430 can output an inverter switching control signal Sic to each gate terminal of the inverter 420 in order to control the switching operation of the inverter 420. Accordingly, the inverter switching control signal Sic can be referred to as a gate driving signal.

. Meanwhile, the inverter switching control signal Sic is a switching control signal of the pulse width modulation method PWM, and is generated and output based on the output current io detected by the output current detector **E.**

. The output current detector E detects the output current io flowing between the inverter 420 and the three-phase motor 250. That is, the current flowing in the motor 250 can be detected.

. The output current detector E can detect all of the output currents ia, ib, ic of each phase, or can detect the output currents of two phases by using three-phase equilibrium.

. The output current detector E can be positioned between the inverter 420 and the motor 250, and a current transformer (CT), a shunt resistor, or the like can be used for current detection.

. The detected output current io, as a discrete signal in the form of a pulse, can be applied to the inverter controller 430, and a switching control signal Sic is generated based on the detected output current io.

. The position detection sensor 105 can sense rotor position information θ of the motor 250. The sensed position information θ can be input to the inverter controller 430.

. Meanwhile, the three-phase motor 250 includes a stator and a rotor, and AC power of each phase having a certain frequency is applied to a coil of the stator of each phase (a, b, c phase), so that the rotor rotates.

. Such a motor 250 can include, for example, a Surface-Mounted Permanent-Magnet Synchronous Motor (SMPMSM), an Interior Permanent Magnet Synchronous Motor (IPMSM), a Synchronous Reluctance Motor (Synrm), and the like. Among these, SMPMSM and IPMSM are a permanent magnet synchronous motor (PMSM) to which permanent magnet is applied, and Synrm has no permanent magnet.

. Meanwhile, the motor 250 according to the embodiment of the present disclosure is described mainly based on an Interior Permanent Magnet Synchronous Motor (IPMSM).

. FIG. 5 is an example of an internal block diagram of an inverter controller of FIG. 4.

. Referring to the drawing, the inverter controller 430 of FIG. 5 can receive the detected output current io from the output current detector 320, and receive rotor position information θ of the motor 250 from the position detection sensor 105.

. The position detection sensor 105 can detect the magnetic pole position θ of the rotor of the motor 250. That is, the position detection sensor 105 can detect the position of the rotor of the motor 250.

. To this end, the position detection sensor 105 can include an encoder, a resolver, or the like.

. In the following descriptions, the coordinate system and coordinate axis used are defined here.

. The αβ coordinate system is a twodimensional fixed coordinate system whose axes are α and β axes which are fixed axes. The α and β axes are orthogonal to each other, and the β axis leads the α axis by electrical angle 90°.

. The dq coordinate system is a twodimensional rotary coordinate system having d and q axes that are rotational axis. In the rotary coordinate system that rotates at the same speed as the rotational speed of the magnetic flux made by the permanent magnet of the motor 250, the axis according to the direction of the magnetic flux made by the permanent magnet is the d axis, and the axis that leads the d axis by electrical angle 90 degrees is the q axis.

. Referring to FIG. 5, the inverter controller 430 can include a speed calculator 320, an axis converter 310, a torque calculator 325, a current command generator 330, a voltage command generator 340, an axis converter 350, and a switching control signal output portion 360.

. The axis converter 310 in the inverter controller 430 receives the three-phase output current (ia, ib, ic) detected by the output current detector E, and converts into a two-phase current (iα, iβ) of the stationary coordinate system.

. Meanwhile, the axis converter 310 can convert the two-phase current (iα, iβ) of the stationary coordinate system into a two-phase current (id, iq) of the rotary coordinate system.

. The speed calculator 320 in the inverter controller 430 estimates the rotor position of the motor 250, based on the two-phase current (iα, iβ) of the stationary coordinate system converted by the axis converter 310. In addition, based on the estimated rotor position , the calculated speed can be output.

. The torque calculator 325 in the inverter controller 430 can calculate the current torque T, based on the calculated speed .

. The current command generator 330 in the inverter controller 430 generates the current command values (i*d, i*q), based on the calculated current torque T and the torque command value T*.

. For example, the current command generator 330 performs a PI control in a PI controller 335, based on the calculated current torque T and the torque command value T*, and can generate the current command value (i*d, i*q). Meanwhile, the value of the d-axis current command value i*d can be set to zero.

. Meanwhile, the current command generator 330 can further include a limiter (not shown) for restricting the level so that the current command value (i*d, i*q) does not exceed an allowable range.

. Next, the voltage command generator 340 generates d-axis and q-axis voltage command values (V*d, V*q), based on the d-axis and q-axis currents (id, iq) that are axis-converted into two-phase rotary coordinate system by the axis converter, and the current command value (i*d, i*q) in the current command generator 330, or the like.

. For example, the voltage command generator 340 can perform the PI control in the PI controller 344, based on a difference between the q-axis current iq and the q-axis current command value i*q, and can generate the q-axis voltage command value V*q. In addition, the voltage command generator 340 can perform the PI control in the PI controller 348, based on a difference between the d-axis current id and the d-axis current command value i*d, and can generate the d-axis voltage command value V*d. Meanwhile, the value of the d-axis voltage command value V*d can be set to zero, in correspondence with the case where the value of the d-axis current command value i*d is set to zero.

. Meanwhile, the voltage command generator 340 can further include a limiter (not shown) for restricting the level so that the d-axis and q-axis voltage command values (V*d, V*q) do not exceed the allowable range.

. Meanwhile, the generated d-axis and q-axis voltage command values (V*d, V*q) are input to the axis converter 350.

. The axis converter 350 receives the position calculated by the speed calculator 320 and the d-axis and q-axis voltage command values (V*d, V*q), and performs axis conversion.

. First, the axis converter 350 performs conversion from a two-phase rotary coordinate system to a two-phase stationary coordinate system. In this case, the position calculated by the speed calculator 320 can be used.

. In addition, the axis converter 350 performs conversion from two-phase stationary coordinate system to three-phase stationary coordinate system. Through this conversion, the axis converter 350 outputs the three-phase output voltage command value (V*a, V*b, V*c).

. The switching control signal output portion 360 generates and outputs a switching control signal Sic according to the pulse width modulation PWM method based on the three-phase output voltage command value (V*a, V*b, V*c).

. The output inverter switching control signal Sic can be converted into a gate driving signal by a gate motor driving device (not shown), and input to the gate of each switching element in the inverter 420. Thus, each of the switching elements (Sa, S'a, Sb, S'b, Sc, S'c) in the inverter 420 performs a switching operation.

. FIG. 6 is a block diagram illustrating a battery charging device according to an embodiment of the present disclosure.

. Referring to the drawing, a battery charging device 610 can include a filter 620 removing noise of input AC power (Vac) 201, a relay device 630 for preventing inrush current of the AC power 201 from the filter 620, a rectifier 640 configured to rectify the AC power 201 from the relay device 630, and a converter 650 configured to convert power from the rectifier 640 into DC power.

. The filter 620 can include an inductor or a capacitor, and can be implemented in various forms including an LLC filter, an LCC filter, etc.

. The relay device 630 can output first current during a first period, and output second current larger than the first current during a second period after the first period, in order to prevent the inrush current, by the input AC power (Vac) 201.

. Accordingly, the inrush current can be prevented during the first period.

. Meanwhile, the battery charging device 610 can further include a dc link capacitor 655 placed at an output terminal of the converter 650, a dc/dc converter 670 configured to convert a level of DC voltage of the dc link capacitor 655, and a filter 680 removing noise of output voltage of the dc/dc converter 670.

. Accordingly, the battery charging device 610 can convert the AC voltage into the DC voltage, and store the DC voltage in the battery 205.

. Meanwhile, the filter 620, the relay device 630, the rectifier 640, the converter 650, the dc link capacitor 655, the dc/dc converter 670, and the filter 680 in the battery charging device 610 can be provided in one circuit board, and Accordingly, the battery charging device 610 can also referred to as an on board charger.

. Meanwhile, the filter 620, the relay device 630, the rectifier 640, the converter 650, and the dc link capacitor 655 in the battery charging device 610 can be connected to a first ground. The first ground at this time can correspond to a ground of the input AC power (Vac) 201.

. Meanwhile, the dc/dc converter 670 and the filter 680 in the battery charging device 610 can be connected to a second ground. The second ground at this time can correspond to a ground of the battery 205.

. That is, the dc/dc converter 670 and the filter 680 in the battery charging device 610 can be set to a separate ground from other internal units, and insulated from other internal units.

. Meanwhile, an output terminal of the converter 650 can correspond to node a - node b in FIG. 4, and Accordingly, the dc link capacitor 655 can correspond to the capacitor C in the motor driving device 200 in FIG. **4****.**

. For example, the battery charging device 610 can charge the DC voltage in the battery 205 based on power or energy movement toward the filter 620, the relay device 630, the rectifier 640, the converter 650, the dc link capacitor 655, the dc/dc converter 670, the filter 680, and the battery 205 in a charging mode during vehicle stopping.

. Meanwhile, the filter 620, the relay device 630, the rectifier 640, and the converter 650 in the battery charging device 610 can not operate during vehicle driving.

. Meanwhile, in a discharging mode during vehicle driving, the filter 620, the relay device 630, the rectifier 640, and the converter 650 can not operate, and the battery charging device 610 can output the DC voltage stored in the battery 205, based on the power or energy movement toward the battery 205, the filter 680, the dc/dc converter 670, and the dc link capacitor 655, and the converter 420 and the motor 250 can operate by using the output DC voltage.

. Meanwhile, in the charging mode during vehicle driving, e.g., a regenerative mode, the filter 620, the relay device 630, the rectifier 640, and the converter 650 can not operate, and the battery charging device 610 can use regenerative power by the inverter 420 and the motor 250 to charge the battery 205 with the DC voltage based on power or energy movement toward the dc link capacitor 655, the dc/dc converter 670, the filter 680, and the battery 205.

. FIG. 7A is an example of a circuit diagram of a relay device related to the present disclosure, and FIG. 7B is a diagram referred to in the description of FIG. 7A.

. Referring to the drawings, a relay device 630x related to the present disclosure can include a current limiter 632, a relay 634x, and a relay driving circuit 638 in order to prevent the inrush current between the input AC power 201 and a load 690.

. The relay 634x includes a relay switch 635 and a relay coil 636.

. FIG. 7B illustrates an output voltage waveform Vrx of the relay driving circuit 638, and a driving waveform Srx of the relay.

. As illustrated in FIG. 7B, when the relay driving circuit 638 is turned off from a time Tx1 to a time Tx2, the relay 634x is turned off, so first current based on the input AC power 201 is supplied to the load 690 through the current limiter 632.

. Meanwhile, when the relay driving circuit 638 operates from the time Tx2 to a time Tx3, and outputs voltage V1, the relay 634x is turned on, so second current does not flow to the current limiter 632 but is supplied to the load 690 through the relay 634x.

. Meanwhile, when the relay driving circuit 638 operates from the time Tx2 to the time Tx3, and outputs the voltage V1, the relay coil 636 is a secondary side of the relay 634x generate continuous heat generation by a level of the voltage V1, and Accordingly, a damage possibility of the relay 634x is increased.

. Accordingly, the present disclosure presents a method for heat generation reduction and damage possibility reduction of the relay in the relay device. This is described with reference to FIG. 8 or below.

. FIG. 8 is an example of a circuit diagram of a relay device according to an embodiment of the present disclosure.

. Referring to the drawing, a relay device 630a according to an embodiment of the present disclosure includes the current limiter 632 configured to limit the current of the input AC power 201, the relay 634 of which primary side is connected between a first terminal Na and a second terminal Nb corresponding to both terminals of the current limiter 632, a first power supply 802 connected between a third terminal Nc which a secondary side of the relay 634, and a ground terminal Ng, and configured to supply first power V1, a first switching element SWa connected between a fourth terminal Nd which is a secondary side of the relay 634, and the ground terminal Ng, and a second power supply 804 and a second switching element SWb connected in series between the fourth terminal Nd and the ground terminal Ng.

. Meanwhile, the second power supply 804 is configured to supply second power V2 lower than the first power V1.

. Meanwhile, the relay 634 includes a relay switch 635 at a primary side and a relay coil 636 at a secondary side.

. Meanwhile, when the first switching element SWa is turned on, and the second switching element SWb is turned off, the first power V1 can be supplied to the relay 634, and when the first switching element SWa is turned off, and the second switching element SWb is turned on, third power V3 which is a difference between the first power V1 and the second power V2 can be supplied to the relay 634. Accordingly, as powers at different levels are sequentially supplied to the relay 634, heat generation of the relay 634, in particular, the relay coil 636 can be reduced. Furthermore, when the battery 205 is charged, the inrush current can be prevented.

. By comparing with the relay device 630x in FIG. 7A, the relay device 630a in FIG. 8 sequentially is configured to supply powers at different levels to the relay 634. Accordingly, the heat generation of the relay 634, in particular, the relay coil 636 can be reduced.

. FIGS. 9A and 9B are diagrams referred to in the description of FIG. 8.

. FIG. 9A is a view illustrating voltage applied to the relay coil 636 according to operations of the first switching element SWa and the second switching element SWb, and FIG. 9B illustrates the output voltage waveform Vra of the relay driving circuit 638, and the driving waveform Sra of the relay according to the operations in FIG. 9A.

. Referring to the drawings, during a period of Ta1 to Ta2, both the first switching element SWa and the second switching element SWb in the relay driving circuit 638 can be turned off.

. When both the first switching element SWa and the second switching element SWb are turned off, the first power V1 is supplied to a third node Nc, but a fourth node Nd is floated, so operable voltage is not supplied to both terminals of the relay coil 636 which is the secondary side of the relay 634, and Accordingly, the relay 634 can be turned off.

. Next, during a period of Ta2 to Ta3, the first switching element SWa in the relay driving circuit 638 can be turned on, and the second switching element SWb can be turned off.

. When the first switching element SWa is turned on and the second switching element SWb is turned off, the first power V1 is supplied to the third node Nc and the fourth node Nd is connected to the ground, and Accordingly, the first power V1 is supplied to both terminals of the relay coil 636 which is the secondary side of the relay 634. Accordingly, the relay 634 is turned on.

. Next, during a period of Ta3 to Ta4, the first switching element SWa in the relay driving circuit 638 can be turned on, and the second switching element SWb can be turned on.

. When the first switching element SWa is turned on and the second switching element SWb is turned on, the first power V1 is supplied to the third node Nc, and the ground and the second voltage V2 are connected to the fourth node Nd, but consequently, a state in which the fourth node Nd is connected to the ground is continuously maintained.

. Consequently, the first power V1 is supplied to both terminals of the relay coil 636 which is the secondary side of the relay 634. Accordingly, the relay 634 is turned on.

. Next, during a period of Ta4 to Ta5, the first switching element SWa in the relay driving circuit 638 can be turned off, and the second switching element SWb can be turned on.

. When the first switching element SWa is turned off and the second switching element SWb is turned on, the first power V1 is supplied to the third node Nc, and the connection of the ground to the fourth node Nd is turned off, and the second power V2 is connected to the fourth node Nd.

. Accordingly, when the first switching element SWa is turned off and the second switching element SWb is turned on, the first power V1 is connected to the third node Nc and the second power V2 is connected to the fourth node Nd.

. Consequently, the third power V2 which is the difference between the first power V1 and the second power V2 is supplied to both terminals of the relay coil 636 which is the secondary side of the relay 634. Accordingly, the relay 634 is turned on.

. Meanwhile, during a period of Ta4 to Ta5, even though the relay 634 is turned on, the third power V3 at a lower level than the first power V1 is supplied to both terminals of the relay coil 636 which is the secondary side of the relay 634, so heat generation of the relay 634, in particular, the relay coil 636 can be reduced.

. Accordingly, as powers at different levels are sequentially supplied to the relay 634, the heat generation of the relay 634 can be reduced.

. In other words, the powers V1 and V3 at a plurality of levels can be sequentially supplied to the coil 636 in the relay 634, based on the operation of the first switching element SWa or the second switching element SWb. Accordingly, as powers at different levels are sequentially supplied to the relay 634, the heat generation of the relay 634 can be reduced.

. Meanwhile, the level of the second power V2 can be 20 to 60% of the first power V1.

. Accordingly, during the period of Ta4 to Ta5, the third power V3 which is the difference between the first power V1 and the second power V2 is supplied to both terminals of the relay coil 636 which is the secondary side of the relay 634, and at this time, the level of the third power V3 can be 40 to 80% of the level of the first power V1.

. Meanwhile, referring to FIG. 9B, during a first period (Ta 1 to Ta2), first current Ia based on the input AC power 201 can flow on the current limiter 632, and during a second period (Ta2 to Ta5) after the first period (Ta1 to Ta2), second current Ib based on the input AC power 201 can flow on the relay 634. Accordingly, when the battery is charged, the inrush current can be prevented.

. Meanwhile, the second current Ib can have a higher level than the first current la.

. In other words, unlike the first current Ia which flows through the current limiter 632, the second current Ib flows through the relay 634, so when the battery 205 is charged, the second current Ib is not influenced by the current limiter 632, thereby preventing the heat generation of the current limiter 632 or a limitation of the input AC power 201 by the current limiter 632.

. Meanwhile, during the second period (Ta2 to Ta5), the powers V1 and V3 at the plurality of levels can be sequentially supplied to the coil 636 in the relay 634, based on the operation of the first switching element SWa or the second switching element SWb. Accordingly, as powers at different levels are sequentially supplied to the relay 634, the heat generation of the relay 634 can be reduced.

. Meanwhile, the period of Ta3 to Ta4 in FIGS. 9A and 9B is omitted, so it is also possible that the first switching element SWa and the second switching element SWb operate.

. In other words, during the period of Ta2 to Ta3, the first switching element SWa is turned on and the second switching element SWb is turned off, and then on operations of the first switching element SWa and the second switching element SWb are omitted, and immediately, similarly during the period of Ta4 to Ta5, it is also possible that the first switching element SWa is turned off and the second switching element SWb is turned on. Accordingly, as powers at different levels are sequentially supplied to the relay 634, the heat generation of the relay 634 can be reduced.

. Meanwhile, the operations of the first switching element SWa and the second switching element SWb in FIG. 9A or 9B can be controlled by the controller 170 in FIG. 2 or the inverter controller 430 in FIG. 3.

. Meanwhile, in FIGS. 8 to 9B, it is also possible that a third switching element (not illustrated) and a third power supply (not illustrated) which are connected in parallel are further provided between the fourth node Nd and the ground terminal Ng additionally in addition to the first switching element SWa and the second switching element SWb.

. Accordingly, after the period of Ta5, further level having a lower level than the third power can also be supplied to the relay 634. Accordingly, as the power at the third level which is sequentially reduced is supplied to the relay 634, the heat generation of the relay 634 can be further reduced.

. FIG. 10 is an example of a circuit diagram of a relay device according to another embodiment of the present disclosure.

. Referring to the drawing, a relay device 630b according to another embodiment of the present disclosure includes the current limiter 632 configured to limit the current of the input AC power 201, the relay 634 of which primary side is connected between the first terminal Na and the second terminal Nb corresponding to both terminals of the current limiter 632, a power supply 637 connected between the third terminal Nc which is the secondary side of the relay 634, and the ground terminal Ng, and a switching element SW connected between the fourth terminal Nd which is the secondary side of the relay 634, and the ground terminal Ng.

. Meanwhile, the power supply 637 is configured to supply the first power V1, and is configured to supply the second power V2 lower than the first power V1.

. Meanwhile, the relay 634 includes a relay switch 635 at a primary side and a relay coil 636 at a secondary side.

. Meanwhile, when the switching element SW is turned on, the power supply 637 can supply the first power V1, and supply the second power V2 lower than the first power V1. Accordingly, as powers at different levels are sequentially supplied to the relay 634, heat generation of the relay 634, in particular, the relay coil 636 can be reduced. Furthermore, when the battery 205 is charged, the inrush current can be prevented.

. By comparing with the relay device 630x in FIG. 7A, a relay device 630b in FIG. 10 sequentially is configured to supply powers at different levels to the relay 634. Accordingly, the heat generation of the relay 634, in particular, the relay coil 636 can be reduced.

. FIGS. 11A and 11B are diagrams referred to in the description of FIG. 10.

. FIG. 11 is a view illustrating voltages applied to the switching element SW, and the relay coil 636 according to the operations of the switching element SW, and FIG. 11B illustrates the output voltage waveform Vrb of the relay driving circuit 638, and the driving waveform Srb of the relay according to the operations in FIG. 11A.

. Referring to the drawings, during a period of Tb1 to Tb2, the switching element SW in the relay driving circuit 638 can be turned off.

. When the switching element W is turned off, the third power V1 is supplied to the third node Nc, but the fourth node Nd is floated, so operable voltage is not supplied to both terminals of the relay coil 636 which is the secondary side of the relay 634, and Accordingly, the relay 634 can be turned off.

. Next, during a period of Tb2 to Tb4, the switching element SW in the relay driving circuit 638 can be turned on, and the power supply 637 can supply the first power V1.

. When the switching element SW is turned on, the first power V1 is supplied to the third node Nc and the fourth node Nd is connected to the ground, and Accordingly, the first power V1 is supplied to both terminals of the relay coil 636. Accordingly, the relay 634 is turned on.

. Next, during a period of Tb4 to Tb5, the switching element SW in the relay driving circuit 638 can be turned on, and the power supply 637 can supply the second power V2 lower than the first power V1.

. When the switching element SW is turned on, the second power V2 is supplied to the third node Nc and the fourth node Nd is connected to the ground, and Accordingly, the second power V2 is supplied to both terminals of the relay coil 636 which is the secondary side of the relay 634. Accordingly, the relay 634 is turned on.

. Meanwhile, during the period of Tb4 to Tb5, even though the relay 634 is turned on, the second power V2 at a lower level than the first power V1 is supplied to both terminals of the relay coil 636 which is the secondary side of the relay 634, so the heat generation of the relay 634, in particular, the relay coil 636 can be reduced.

. Accordingly, as powers at different levels are sequentially supplied to the relay 634, the heat generation of the relay 634 can be reduced.

. Meanwhile, referring to FIG. 11B, during a first period (Tb 1 to Tb2), the first current Ia based on the input AC power 201 can flow on the current limiter 632, and during a second period (Tb2 to Tb5) after the first period (Tb1 to Tb2), the second current Ib based on the input AC power 201 can flow on the relay 634. Accordingly, when the battery is charged, the inrush current can be prevented.

. Meanwhile, the second current Ib can have a higher level than the first current la.

. In other words, unlike the first current Ia which flows through the current limiter 632, the second current Ib flows through the relay 634, so when the battery 205 is charged, the second current Ib is not influenced by the current limiter 632, thereby preventing the heat generation of the current limiter 632 or a limitation of the input AC power 201 by the current limiter 632.

. Meanwhile, during the second period (Tb2 to Tb5), the powers V1 and V2 at the plurality of levels can be sequentially supplied to the coil 636 in the relay 634, based on the operation of the switching element SW. Accordingly, as powers at different levels are sequentially supplied to the relay 634, the heat generation of the relay 634 can be reduced.

. While the preferred embodiments of the present disclosure have been illustrated and described above, the present disclosure is not limited to the aforementioned specific embodiments, various modifications can be made by a person with ordinary skill in the technical field to which the present disclosure pertains without departing from the subject matters of the present disclosure that are claimed in the claims, and these modifications should not be appreciated individually from the technical spirit or prospect of the present disclosure.

## Claims

1. A relay device comprising:
a current limiter configured to limit current of input AC power;
a relay of which primary side is connected between a first terminal and a second terminal corresponding to both terminals of the current limiter;
a first power supply connected between a third terminal corresponding to a secondary side of the relay, and a ground terminal, and configured to supply first power;
a first switching element connected between a fourth terminal corresponding to a secondary side of the relay, and the ground terminal; and
a second power supply and a second switching element connected to each other in series between the fourth terminal and the ground terminal,
wherein the second power supply is configured to supply second power lower than the first power.

2. The relay device of claim 1, wherein in response to the first switching element being turned on and the second switching element being turned off, the first power is supplied to the relay, and
in response to the first switching element being turned off and the second switching element being turned on, third power which is a difference between the first power and the second power is supplied to the relay.

3. The relay device of claim 1, wherein in response to the first switching element being turned on and the second switching element being turned off, the first power is supplied to the relay,
in response to the first switching element being turned on and the second switching element being turned on, the first power is supplied to the relay, and
in response to the first switching element being turned off and the second switching element being turned on, the third power which is the difference between the first power and the second power is supplied to the relay.

4. The relay device of claim 1, wherein based on an operation of the first switching element or the second switching element, powers at a plurality of levels are sequentially supplied to a coil in the relay.

5. The relay device of claim 1, wherein first current based on the input AC power flows on the current limiter during a first period, and
second current based on the input AC power flows on the relay during a second period after the first period.

6. The relay device of claim 5, wherein a level of the second current is higher than a level of the first current.

7. The relay device of claim 5, wherein powers at a plurality of levels are sequentially supplied to the coil in the relay based on the operation of the first switching element or the second switching element during the second period.

8. A relay device comprising:
a current limiter configured to limit current of input AC power;
a relay of which primary side is connected between a first terminal and a second terminal corresponding to both terminals of the current limiter;
a power supply connected between a third terminal corresponding to a secondary side of the relay, and a ground terminal; and
a switching element connected between a fourth terminal corresponding to a secondary side of the relay, and the ground terminal,
wherein the power supply is configured to supply first power, and then is configured to supply second power lower than the first power.

9. The relay device of claim 8, wherein in response to the switching element being turned on, the first power is supplied to the relay, and then the second power lower than the first power is supplied to the relay.

10. The relay device of claim 8, wherein first current based on the input AC power flows on the current limiter during a first period, and
second current based on the input AC power flows on the relay during a second period after the first period.

11. The relay device of claim 10, wherein a level of the second current is higher than a level of the first current.

12. The relay device of claim 10, wherein powers at a plurality of levels are sequentially supplied to a coil in the relay based on an operation of the switching element during the second period.

13. A battery charging device comprising a relay device of any one of claims 1 to 12.

14. The battery charging device of claim 13, further comprising:
a rectifier configured to rectify AC power from the relay device;
a converter configured to convert power from the rectifier into DC power; and
a dc link capacitor placed at an output terminal of the converter.

15. The battery charging device of claim 14, further comprising:
a dc/dc converter configured to convert a level of the DC voltage of the dc link capacitor.
